# EUROPÄISCHE PATENTSCHRIFT

(11) **EP 0 682 036 B1**
(45) Veröffentlichungstag und Bekanntmachung des Hinweises auf die Patenterteilung: **09.08.2000**
(21) Anmeldenummer: 95106258.7
(22) Anmeldetag: 26.04.1995
(51) Int. Cl.: C07F 17/00

(54) **Verfahren zur Synthese von Mono- und Dimethylmetallocenen und deren Lösungen speziell für den Einsatz zur Polymerisation von Olefinen**
Process for the preparation of mono- and dimethylmetallocenes and their solutions especially for the use in the polymerisation of olefines
Procédé de préparation de mono- et diméthylmétallocènes et leur utilisation spécifiquement pour la polymérisation d'oléfines

(30) Priorität: 13.05.1994 DE 4416894
(43) Veröffentlichungstag der Anmeldung: 15.11.1995
(73) Patentinhaber: Witco GmbH, 59192 Bergkamen (DE)
(72) Erfinder: Lisowsky, Richard, Dr., D-59174 Kamen (DE)

(56) Entgegenhaltungen:
- GB-A- 2 209 166

## Beschreibung

Die vorliegende Erfindung bezieht sich auf ein verbessertes Verfahren zur Herstellung von Alkylübergangsmetallkomplexen, insbesondere Mono- und Dialkylmetallocenen bzw. auf ein Verfahren zur Herstellung von Lösungen solcher Verbindungen, die direkt zum Einsatz in der Polymerisation von Olefinen geeignet sind.

Mono- und insbesondere Dialkylmetallocenverbindungen können in Kombination mit speziellen Co-Katalysatoren, wie beispielsweise Aluminoxanen oder insbesondere Triphenylborderivaten, Tetraphenylboratderivaten und Alkylaluminiumfluoriden, hochaktive Katalysatorsysteme bilden (J. Organomet. Chem. 1992, 434, C1 - C5, Organometallics 1991, 10, 3910; J. Am. Chem. Soc. 1989, 111, 2728; EP-A-0 522 581; EP-A-0 468 537).

Bisher in der Literatur bekannte Verfahren zur Darstellung von Mono- und Dialkylmetallocenverbindungen (insbesondere Dimethylverbindungen), bei denen Lithiumalkyle oder Alkylgrignardverbindungen eingesetzt werden, weisen eine Reihe von Nachteilen auf.

Die Synthesen sind bedingt durch den Einsatz von Methyl-Grignard oder Methyl-Lithium an polare Lösungsmittel, wie typischerweise Diethylether oder Tetrahydrofuran, gebunden. Diese Lösungsmittel stellen jedoch Katalysatorgifte für die Anwendung in der Olefinpolymerisation dar, so daß nach der Reaktion der Metallocene mit den entsprechenden Alkylierungsmitteln das Lösungsmittel komplett entfernt und die Verbindung rein isoliert werden muß.

Des weiteren sind je nach Metallocen die Ausbeuten bei deren Umsetzungen zu den entsprechenden Alkylderivaten stark schwankend. ("Chemistry Of Organo-Zirconium and - Hafnium Compounds", D. J. Cardin, M. F. Lappert, C. L. Raston, 1986, Ellis Horwood Limited, 145 - 180; "Organo-metallic Chemistry of Titanium, Zirconium and Hafnium", P. C. Wailes, R. S. P. Coutts and H. Wiegold, 1974, Academic Press, Ins., 92 - 97, 150 - 151, 185 - 187; Gmelins Handbook of Inorganic Chemistry, Volume 10, Organo-Zirconium Compounds, 1973, Verlag Chemie - Weinheim/Bergstraße, p. 54 - 58; Gmelins Handbook of Inorganic Chemistry, Volume 11, Organo-Hafnium Compounds, 1973, Verlag Chemie - Weinheim/Bergstraße, p. 12).

Aufgabe der vorliegenden Erfindung war es daher, ein Verfahren zu entwickeln, welches diese Nachteile des Standes der Technik überwindet und mit welchem entweder die reinen Alkylübergangsmetallverbindungen in hohen Ausbeuten direkt herstellbar sind oder sogar ohne zusätzliche Aufarbeitungsstufen direkt in der Olefinpolymerisation mitverwendbare katalysatorgiftfreie Lösungen der Alkylübergangsmetallverbindungen erhalten werden können.

Diese Aufgabe wurde gelöst durch Umsetzung von Halogenübergangsmetallverbindungen mit Trimethylaluminium und anorganischen Salzen in Kohlenwasserstoffen .

Gegenstand der Erfindung ist daher ein Verfahren zur Herstellung von Verbindungen der allgemeinen Formel (1)

(Q)ₘ(CpRa)(Cp'R'a')M(CH₃)ₙX₂₋ₙ (1)

worin
- Cp =: ein Cyclopentadienyl-, ein Indenyl-, ein Fluorenylrest
- R, R*'* =: Alkyl-, Phosphin-, Amin-, Alkylether- oder Arylethergruppen mit 0 ≤a ≤5, 0 ≤a' ≤5
- Cp*'* =: eine der Gruppen Cp oder
- Cp*'* =: N mit R*'* = Alkyl- oder Arylrest mit a*'* = 1 und
- Q =: eine ein- oder mehrgliedrige Brücke 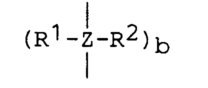 zwischen Cp und Cp' ist, worin R¹ und R² gleich oder verschieden ein Wasserstoffatom, eine C₁-C₁₀-Alkylgruppe, eine C₆-C₁₀-Arylgruppe und Z Kohlenstoff, Silizium oder Germanium bedeutet mit b = 1, 2 oder 3
- M =: Ti, Zr, Hf ist
- X =: Halogen, insbesondere Cl, Br ist und
- n =: 1 oder 2
- m =: 0 oder 1 sein kann.

Die erfindungsgemäß mitverwendeten Halogenübergangsverbindungen entsprechen der allgemeinen Formel (2)

(Q)ₘ(CpRa)(Cp'R'a')MX₂ (2)

worin bedeuten
- Cp =: ein Cyclopentadienyl-, ein Indenyl-, ein Fluorenylrest
- R, R' =: Alkyl-, Phosphin-, Antin-, Alkylether- oder Arylethergruppen mit 0 ≤a ≤5, 0 ≤a' ≤5
- Cp' =: eine der Gruppen Cp oder
- Cp' =: N mit R' = Alkyl- oder Arylrest mit a' = 1 und
- Q =: eine ein- oder mehrgliedrige Brücke 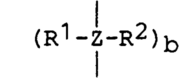 zwischen Cp und Cp' ist, worin R¹ und R² gleich oder verschieden ein Wasserstoffatom, eine C₁-C₁₀-Alkylgruppe, eine C₆-C₁₀-Arylgruppe und Z Kohlenstoff, Silizium oder Germanium bedeutet mit b = 1, 2 oder 3
- M =: Ti, Zr, Hf ist
- X =: Halogen, insbesondere Cl, Br ist und
- m =: 0 oder 1 sein kann.

Diese Verbindungen gehören zum bekannten Stand der Technik und werden beispielsweise beschrieben in "Chemistry of Organo-Zirconium and -Hafnium Compounds", D. J. Cordin; M. F. Lappert; C. L. Raston, 1986, Ellis Horwood Ltd, 145 - 180; EP-A-0 576 970, EP-A-0 549 900, EP-A-0 522 581, EP-A-0-519 237, EP-A-0-468 537, EP-A-0-420 436, EP-A-0 416 815, EP-A-0-302 424.

Diese Verbindungen werden in einem inerten Lösungsmittel, vorzugsweise aliphatischen und/oder aromatischen Kohlenwasserstoffen, vorgelegt.

Die Kohlenwasserstoffe haben vorzugsweise Siedepunkte zwischen 50 und 150 °C, insbesondere zwischen 70 - 120 °C, wie Hexan, Heptan, Octan, Dekan, Toluol, Xylol.

Zu dieser Mischung wird unter intensivem Rühren Trimethylaluminium (TMA) bei Raum- oder erhöhter Temperatur zudosiert.

Je nach gewünschtem Substitutionsgrad (Monomethyl- oder Dimethyl-Verbindung) beträgt das molare Verhältnis von Halogenübergangsmetallverbindung : TMA = 1 : 1,1 bis 1 : 2,4. Im Falle der Dimethylverbindungen sind die Überschüsse unkritisch, sollten jedoch im Hinblick auf die Verfahrensökonomie möglichst gering gehalten werden.

Die Mischung aus Halogenübergangsverbindung und TMA wird unter intensivem Rühren bei Temperaturen von 20 - 120 °C, vorzugsweise 70 - 100 °C, zur Reaktion gebracht. Bei diesen Temperaturen sind Reaktionszeiten von 0,5 - 1,5 h ausreichend.

Die Reaktionsmischung wird - gegebenenfalls nach Abkühlung bis auf Raumtemperatur - mit einem Alkali- und/oder Erdalkalifluorid, vorzugsweise NaF oder KF, versetzt. Hierbei ist das Verhältnis von F⁻ zu TMA = 1 : 1 bevorzugt.

Zur quantitativen Bildung der Methylübergangsmetallverbindung wird vorteilhafterweise die Reaktion 0,5 - 1,5 h bei 70 - 100 °C zu Ende geführt.

Die gebildeten unlöslichen Aluminium-Fluorid-Komplexe werden durch übliche Verfahren wie Dekantieren, Zentrifugieren, Filtration abgetrennt.

Das Filtrat, welches die Methylübergangsmetallverbindungen in hoher Reinheit und Ausbeute enthält, kann ohne weitere Aufarbeitungsprozesse direkt zur Polymerisation von Olefinen eingesetzt werden.

Falls gewünscht, können die Methylübergangsmetallverbindungen auch nach üblichen Verfahren isoliert werden.

Dies soll durch die folgenden Beispiele erläutert werden. Sämtliche Reaktionen wurden unter Ausschluß von Feuchtigkeit und O₂ in Inertgasatmosphäre durchgeführt.

### Beispiele

### Beispiel 1

a) Umsetzung von Indenyl₂ZrCl₂ mit TMA/KF in Toluol
   20 g Indenyl₂ZrCl₂ (51 mmol) wurden in 250 mL Toluol vorgelegt und mit 7,35 g Trimethylaluminium (102 mmol) versetzt und auf 80 °C erhitzt.
   Nach 30 min wurden 5,92 g KF (102 mmol) zugegeben und 1 h refluxiert.
   Die Reaktionslösung wurde dann heiß filtriert und das Filtrat auf -20 °C gekühlt.
   Es konnten mittels Filtration 14,2 g (79 %) an Indenyl₂ZrMe₂ isoliert werden.
   ¹H-NMR (CDCl₃):
      7.5 - 7.4 (m, 4H, Aromaten-H); 7.15 - 7.05 (m, 4H, Aromaten-H); 6.08 (d, 4H, C₅H₂);
      5.95 (t, 2H, C₅H); -1.15 (s, 6H, CH₃)

   - Zr:: gef.: 24.8 (ber.: 25.9 %);
   - Hydrolysegas:: CH₄: gef.: 127 NmL/g (ber.: 127.4 NmL/g)
b) Umsetzung von Indenyl₂ZrCl₂ mit KF/TMA in Heptan
   Analoge Durchführung zu 1 a), jedoch anstelle von Toluol wurde Heptan eingesetzt. Man erhielt 14.75 (83 %) sauberes Produkt.
   - Zr:: gef.: 25.1 %(ber.: 25.9 %);
   - Hydrolysegas:: CH₄: gef.: 127 NmL/g (ber.: 127.4 NmL/g)
   [1-H-NMR identisch mit dem in 1 a)]

### Beispiel 2:

### Umsetzung von EthylenIndenyl₂ZrCl₂ mit KF/TMA

Es wurden 19.2 g rac-EthylenIndenyl₂ZrCl₂ (45.9 mmol) in 200 mL Heptan vorgelegt und mit 7.35 g Trimethylaluminium (102 mmol) versetzt.

Nach 1/2 h Rückfluß wurden 5.92 g KF (102 mmol) zugesetzt und weitere 1 1/2 h refluxiert.

Nach Heißfiltration wurde das Filtrat auf 50 mL eingeengt und auf -20 °C gekühlt.

Mittels Filtration konnte man schließlich 15 g reines EthylenIndenyl₂ZrMe₂ (86.5 % d. Th.) isolieren.
- Zr:: gef.: 23.5 % (ber.: 24.2 %);
- Hydrolysegas:: CH₄: gef.: 115 NmL/g (ber.: 118.6 NmL/g)

¹H-NMR (CDCl₃):
   7.5 - 7.0 (m, 8H, C₆H₄); 6.55 (d, 2H, C₅H); 6.0 (d, 2H, C₅H);
   3.4 - 3.1 (m, 4H, -CH₂CH₂-); -1.4 (s, 6H, CH₃)

### Beispiel 3

### Umsetzung von Cp₂ZrCl₂ mit KF/TMA

1.94 g Cp₂ZrCl₂ (6.64 mmol) wurden in 10 mL Heptan suspendiert und mit 0.96 g Trimethylaluminium (13.8 mmol) versetzt und 1/2 h refluxiert. Nach Zugabe von 0.77 g KF wurde weitere 60 min refluxiert.

Mittels ¹H-NMR war in der Lösung anschließend als Metallocen ausschließlich die gewünschte Verbindung Cp₂ZrMe₂ nachzuweisen.
¹H-NMR (CDCl₃):
   6.1 (s, 10H, C₅H₅), -0.4 (s, 6H, CH₃)

### Beispiel 4

### Umsetzung von n-ButylCp₂ZrCl₂ mit KF/TMA

Es wurden 1.94 g n-ButylCp₂ZrCl₂ (4.8 mmol) in 10 mL Heptan gegeben, mit 0.7 g Trimethylaluminium (9.6 mmol) versetzt und 1/2 h bei 80 °C gerührt.

Dann wurden 0.56 g KF (9.6 mmol) zugesetzt und erneut 1 h refluxiert. Danach war in der Lösung ¹H-NMR-spektroskopisch als Metallocen ausschließlich die gewünschte Verbindung n-ButylCp₂ZrMe₂ nachzuweisen.

Weder der Einsatzstoff n-ButylCp₂ZrCl₂ noch die Zwischenstufe n-ButylCp₂ZrCl(CH₃) waren nachweisbar.
¹H-NMR (CDCl₃):
   5.95 - 5.9 (m, 4H, C₅H₂), 5.83 - 5.78 (m, 4H, C₅H₂) 2.45 (t, 4H, -CH₂-); 1.6 - 1.25 (m, 8H, -CH₂-CH₂-); 0.95 (t, 6H, CH₃);
   - 0.5 (s, 6H, CH₃)

### Beispiel 5

### Umsetzung von 1,3-ButylmethylCp₂ZrCl₂

Durchführung analog wie in 4., jedoch mit 2.1 g (4.8 mmol) 1,3-ButylmethylCp₂ZrCl₂.
Es konnte als Metallocenverbindung wiederum ausschließlich das gewünschte 1,3-n-ButylmethylCp₂ZrMe₂ nachgewiesen werden.
¹H-NMR (CDCl₃) :
   5.78 (t, 2H, C₅H); 5.52 (d, 4H, C₅H₂), 2.4 - 2.15 (m, 4H, -CH₂-)
   2.05 (s, 6H, CH₃); 1.6 - 1.3 (m, 8H, -CH₂CH₂-); 0.9 (t, 6H, CH₃)
   - 0.53 (s, 6H, CH₃)

### Beispiel 6

### Umsetzung von Me₂Si[(^{t}BuN)(Me₄Cp)]TiCl₂ mit KF/TMA

2.38 g (6.4 mmol) Me₂Si[(Me₄Cp)(N^{t}Bu)]TiCl₂ wurden in 10 ml Heptan vorgelegt und bei Raumtemperatur mit 1 g Trimethylaluminium (13.8 mmol) versetzt.

Es wurde 30 min refluxiert und danach mit 0.84 g KF (13.8 mmol) versetzt und erneut 30 min refluxiert.

Anschließend konnte mittels ¹H-NMR in der Reaktionslösung ausschließlich die Verbindung Me₂Si[(Me4Cp) (N^{t}Bu)]TiMe₂ nachgewiesen werden.
¹H-NMR (CDCl₃):
   2.18 (s, 6H, Me₂Cp); 1.92 (s, 6H, Me₂Cp); 1.58 (s, 9H, t-ButylN);
   0.48 (s, 6H, (H₂C)₂Si); 0.18 (s, 6H, (H₃C)₂Ti)

### Beispiel 7

### Umsetzung von n-ButylCp₂HfCl₂ mit KF/TMA

2.21 g Bis(n-butylcyclopentadienyl)hafnium dichlorid (4.49 mmol) wurden in 30 mL Heptan vorgelegt und bei Raumtemperatur mit 1.76 mL Trimethylaluminium versetzt. Anschließend rührte man 30 min bei 90 °C.

Danach wurden 1.04 g Kaliumfluorid (17.98 mmol) zugesetzt und weitere 30 min bei 90 °C gerührt.

¹H-NMR-Spektroskopie zeigte ausschließlich das gewünschte Produkt Bis(n-butylCp)HfMe₂ und keinerlei Edukt mehr.
¹H-NMR (CDCl₃):
   5.85 (m, 4H, H₂Cp); 5.75 (m, 4H, H₂Cp); 2.45 (t, 4H, -CH₂-);
   1.65 - 1.2 (m, 8H, -CH₂CH₂-); 0.95 (t, 6H, -CH₃); - 0.62 (s, 6H, H₃C-Ti)

### Beispiel 8

### Versuch der Umsetzung von Indenyl₂ZrCl₂ mit LiCl/TMA

25 g Indenyl₂ZrCl₂ (64 mmol) wurden in 200 mL Heptan vorgelegt, mit 25 mL Trimethylaluminium (255 mmol) versetzt und 1 h refluxiert.

Danach erfolgte Zugabe von 10.81 g LiCl (255 mmol) und erneut 1 h Rückfluß.

Es ließ sich keinerlei Bildung des gewünschten Dimethylderivats mittels ¹H-NMR nachweisen.

### Beispiel 9

### Versuch der Umsetzung von Indenyl₂ZrCl₂ mit ZnCl₂

2.7 g Indenyl₂ZrCl₂ (7.5 mmol) wurden in 30 mL Heptan vorgelegt, mit 2.7 mL Trimethylaluminium (28 mmol) versetzt und 1 h refluxiert.

Danach wurden 4.24 g Zinkchlorid (28 mmol) zugegeben und erneut 1 h refluxiert.

Es ließ sich mittels ¹H-NMR keine Bildung des gewünschten Dimethylderivats beobachten.

### Beispiel 10

### Versuch der Umsetzung von Indenyl₂ZrCl₂ mit KCl/TMA

2.92 Indenyl₂ZrCl₂ (7.5 mmol) wurden in 30 mL Heptan zusammen mit 2.92 g Trimethylaluminium (30 mmol) vorgelegt und 1 h refluxiert.

Dann wurden 2.22 g KCl (30 mmol) zugegeben, und es wurde weitere 2 h refluxiert.

Es ließ sich mittels ¹H-NMR keine Bildung von Indenyl₂ZrMe₂ nachweisen.

### Beispiel 11

### Umsetzung von Indenyl₂ZrCl₂ mit NaF/TMA

40 g Indenyl₂ZrCl₂ (102 mmol) wurden in 400 mL Heptan vorgelegt und mit 40 mL Trimethylaluminium (408 mmol) versetzt. Es wurde 1 h refluxiert.

Dann wurden 17.13 g NaF (408 mmol) zugesetzt, und es wurde weitere 2 h refluxiert.

Die Reaktionsiösung wurde heiß filtriert und auf -20 °C gekühlt.

Es konnten 9.91 g (27.5 % d. Th.) an reinem Indenyl₂ZrCl (CH₃) isoliert werden.
¹H-NMR:
   7.6 - 7.15 (m, 8H, C₆H₄); 6.2 - 6.05 (m, 6H, C₅H₃); -0.55 (s, 3H, CH₃)

### Beispiel 12

### Umsetzung von Indenyl₂ZrCl₂ mit KF/TMA (1 : 1)

50 g (128 mmol) Indenyl₂ZrCl₂ wurden in 500 mL Heptan vorgelegt und bei Raumtemperatur mit 12.6 mL (128 mmol) Trimethylaluminium versetzt. Es wurde 1 h refluxiert.

Dann wurden 7.95 g (128 mmol) KB zugegeben, und es wurde weitere 2 h refluxiert.

Nach Heißfiltration zur Abtrennung der unlöslichen Salze wurde das Filtrat auf -20 °C gekühlt.

Mittels Filtration konnten 31.8 g (71 % d. Th.) an reinem Indenyl₂ZrCl (CH₃) isoliert werden.
¹H-NMR (identisch mit dem in 11.)

### Vergleichsbeispiel

a) Umsetzung von Me₂Si[Me₄Cp)(N^{t}Bu)]TiCl₂ mit TMA ohne Zugabe von KF.
   2.4 g (6.5 mmol) Me₂Si[Me₄Cp)(N^{t}Bu)]TiCl₂ wurden in 10 mL Heptan vorgelegt und mit 1.92 g Trimethylaluminium versetzt. Dann wurde 1 h refluxiert.
   Mittels ¹H-NMR ließ sich anschließend in geringen Mengen (14 %) die monomethylierte Verbindung nachweisen. Zu 86 % bestand die Lösung jedoch aus dem Einsatzstoff, dem entsprechenden Titandichlorid-Komplex. (Setzte man dann jedoch 1.55 g KF zu und ließ noch 1 h bei 80 °C nachreagieren, so kam es zur quantitativen Bildung des Dimethyltitanocens.)
b) Separate Umsetzung von KF und Trimethylaluminium vor dem Einsatz zur Methylierung von Me₂Si[Me₄Cp)(N^{t}Bu)]TiCl₂.
   0.46 g KF (8 mmol) und 0.8 mL (8 mmol) Trimethylaluiminium wurden in 10 mL Heptan 1/2 h bei 90 °C gerührt. Bei Raumtemperatur wurden 1.48 g Me₂Si[Me₄Cp)(N^{t}Bu)]TiCl₂ zugegeben, und es wurde 3 h bei 80 °C nachgerührt.
   Mittels ¹H-NMR ließ sich neben der Ausgangsverbindung (82 %) nur noch die monomethylierte Verbindung (18 %) nachweisen.
c) Zugabe von KF zu Me₂Si[Me₄Cp)(N^{t}Bu)]TiCl₂.
   In 10 mL Heptan wurden 0.96 g KF (16.5 mmol) und 2.04 g der Titandichloridverbindung vorgelegt und 1 h bei 80 °C gerührt.
   Es konnte keinerlei Reaktion (Austausch Cl gegen F) nachgewiesen werden.

## Patentansprüche

1. Verfahren zur Herstellung von Methylübergangsmetallverbindungen der allgemeinen Formel (1)
(Q)ₘ(CpRa)(Cp'R'a')M(CH₃)ₙX₂₋ₙ (1)
worin
Cp = ein Cyclopentadienyl-, ein Indenyl-, ein Fluorenylrest
R, R' = Alkyl-, Phosphin-, Amin-, Alkylether- oder Arylethergruppen mit 0 ≤a ≤5, 0 ≤a' ≤5
Cp' = eine der Gruppen Cp oder
Cp' = N mit R' = Alkyl- oder Arylrest mit a' = 1 und
Q = eine ein- oder mehrgliedrige Brücke 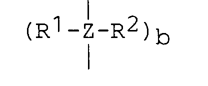 zwischen Cp und Cp' ist, worin R¹ und R² gleich oder verschieden ein Wasserstoffatom, eine C₁-C₁₀-Alkylgruppe, eine C₆-C₁₀-Arylgruppe und Z Kohlenstoff, Silizium oder Germanium bedeutet mit b = 1, 2 oder 3
M = Ti, Zr, Hf ist
X = Halogen, insbesondere Cl, Br ist und
n = 1 oder 2
m = 0 oder 1 sein kann,
dadurch gekennzeichnet, daß die Halogenübergangsmetallverbindungen in einem Kohlenwasserstoff zusammen mit Trimethylaluminium vorgelegt und bei gegebenenfalls erhöhter Temperatur zur Reaktion gebracht werden und die Reaktionslösung danach mit einem Alkali- und/oder Erdalkalifluorid versetzt und anschließend die gebildeten Aluminiumfluorid-Komplexe abgetrennt werden.

2. Verfahren gemäß Anspruch 1, dadurch gekennzeichnet, daß die Umsetzung bei Temperaturen von 20 - 120 °C erfolgt.

3. Verfahren gemäß Anspruch 1, dadurch gekennzeichnet, daß die Umsetzung in gegebenenfalls substituierten aliphatischen Kohlenwasserstoffen und gegebenenfalls substituierten aromatischen Kohlenwasserstoffen mit Siedepunkten zwischen 50 - 150 °C durchgeführt wird.

4. Verfahren gemäß Anspruch 1, dadurch gekennzeichnet, daß als Fluoride NaF oder KF eingesetzt werden.

5. Verfahren gemäß Anspruch 1, dadurch gekennzeichnet, daß das molare Verhältnis von Halogenübergangsverbindung : Trimethylaluminium : Fluorid = 1 : 1 : 1 im Falle der Monomethylübergangsmetallverbindung und 1 : 2 : 2 im Falle der Dimethylübergangsmetallverbindung beträgt.

## Claims

1. Process for preparing methyl-transition metal compounds of the general formula (1)
(Q)ₘ(CpRa)(Cp'R'a')M(CH₃)ₙX₂₋ₙ (1)
where
Cp is a cyclopentadienyl, an indenyl, a fluorenyl radical
R, R' are alkyl, phosphine, amine, alkyl ether or aryl ether groups with 0 ≤ a ≤ 5, 0 ≤ a' ≤ 5
Cp' is one of the groups Cp or
Cp' is N with R' = alkyl or aryl radical with a'= 1 and
Q is a single-membered or multi-membered bridge 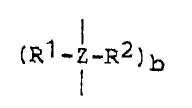 between Cp and Cp', where R¹ and R² are identical or different and are a hydrogen atom, a C₁-C₁₀-alkyl group, a C₆-C₁₀-aryl group and Z is carbon, silicon or germanium with b = 1, 2 or 3
M is Ti, Zr, Hf
X is halogen, in particular Cl, Br and
n can be 1 or 2
m can be 0 or 1,
characterized in that the halogen-transition metal compounds are initially charged in a hydrocarbon together with trimethylaluminium and are reacted, if desired at elevated temperature, and the reaction solution is then admixed with an alkali metal and/or alkaline earth metal fluoride and the aluminium fluoride complexes formed are subsequently separated off.

2. Process according to Claim 1, characterized in that the reaction is carried out at temperatures of 20-120°C.

3. Process according to Claim 1, characterized in that the reaction is carried out in substituted or unsubstituted aliphatic hydrocarbons and substituted or unsubstituted aromatic hydrocarbons having boiling points between 50-150°C.

4. Process according to Claim 1, characterized in that the fluorides used are NaF or KF.

5. Process according to Claim 1, characterized in that the molar ratio of halogen-transition metal compound: trimethylaluminium:fluoride = 1:1:1 in the case of the monomethyl-transition metal compound and 1:2:2 in the case of the dimethyl-transition metal compound.

## Revendications

1. Procédé de préparation de composés méthylés de métaux de transition de formule générale (1)
(Q)ₘ(CpRa)(Cp'R'a')M(CH₃)ₙX₂₋ₙ (1)
dans laquelle
Cp = un radical cyclopentadiényle, un radical indényle, un radical fluorényle
R,R' = des groupements alkyle, phosphine, amine, alkyléther ou aryléther avec 0≤a≤5, 0≤a'≤5
Cp' = un des groupements Cp ou
Cp' = N avec R' = un radical alkyle ou aryle avec a' = 1, et
Q = un pont à un ou plusieurs membres 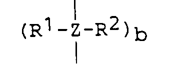 entre Cp et Cp', dans lequel R¹ et R², identiques ou différents, signifient un atome d'hydrogène, un groupement alkyle en C₁-C₁₀, un groupement aryle en C₆-C₁₀ et Z signifie un carbone, un silicium ou un germanium, avec b = 1, 2 ou 3
M = Ti, Zr, Hf
X = un halogène, en particulier un Cl, un Br, et
n = 1 ou 2
m = peut être 0 ou 1,
caractérisé en ce que les composés halogénés de métaux de transition sont préalablement introduits dans un hydrocarbure avec du triméthylaluminium et sont mis en réaction, le cas échéant à une température élevée, et la solution réactionnelle est ensuite mélangée avec un fluorure alcalin et/ou alcalino-terreux, et puis les complexes de fluorure d'aluminium formés sont séparés.

2. Procédé suivant la revendication 1, caractérisé en ce que la transformation s'effectue à des températures de 20 à 120°C.

3. Procédé suivant la revendication 1, caractérisé en ce que la transformation est réalisée dans des hydrocarbures aliphatiques le cas échéant substitués et des hydrocarbures aromatiques le cas échéant substitués avec des points d'ébullition entre 50-150°C.

4. Procédé suivant la revendication 1, caractérisé en ce qu'on utilise comme fluorures du NaF ou du KF.

5. Procédé suivant la revendication 1, caractérisé en ce que le rapport molaire composé halogéné de métaux de transition triméthylaluminium : fluorure s'élève à 1 : 1 : 1 dans le cas du composé monométhylé de métaux de transition, et s'élève à 1 : 2 : 2 dans le cas du composé diméthylé de métaux de transition.
